# EUROPÄISCHE PATENTANMELDUNG

(11) **EP 3 517 327 A1**
(43) Veröffentlichungstag der Anmeldung: **31.07.2019**
(21) Anmeldenummer: 19401003.9
(22) Anmeldetag: 22.01.2019
(51) Int. Cl.: B60D 1/24, G01G 19/02, G01G 19/03, G01G 19/08, B60D 1/145, B60D 1/58, B62D 49/06, G01G 19/32

(54) **ZUGEINRICHTUNG**

(30) Priorität: 30.01.2018 DE 102018102032
(71) Anmelder: Amazonen-Werke H. Dreyer GmbH & Co. KG, 49205 Hasbergen (DE)
(72) Erfinder: Barthel, Maik, 04107 Leipzig (DE); Schaller, Andreas, 04288 Leipzig (DE); Hecht, Tobias, 04275 Leipzig (DE)

(57) **Zusammenfassung**

Zugeinrichtung (6) mit zumindest einem Messelement (9), welches mittels einer lösbaren Flanschverbindung (5) an einer Zugdeichsel (4) einer mobilen Maschine, insbesondere Landmaschine (2) anordbar ist und mittels einer Kupplungsvorrichtung (8) dazu eingerichtet ist, die mobile Maschine mit einer Zugmaschine, insbesondere Ackerschlepper (1) zu verbinden. Um eine universell einsetzbare Zugeinrichtung (6) zu schaffen, die zur Messung an der Zugeinrichtung (6) auftretender Lasten eingerichtet ist, ist vorgesehen, dass die Zugeinrichtung (6) zumindest zwei in zueinander winkligen Messebenen Messwerte aufnehmende Messelemente (9) umfasst.

## Beschreibung

Die Erfindung betrifft eine Zugeinrichtung gemäß dem Oberbegriff des Patentanspruches 1.

Eine derartige Zugeinrichtung ist in DE 101 54 736 B4 beschrieben. Diese Zugeinrichtung ist an einer Zugdeichsel einer als landwirtschaftlichen Anhängestreuer ausgebildeten mobilen Maschine angeordnet und dazu eingerichtet, den Anhängestreuer mit einer Zugmaschine zu verbinden. Hierzu umfasst die Zugeinrichtung eine lösbare Flanschverbindung zur Anordnung an der Zugdeichsel und eine Kupplungsvorrichtung zur Verbindung zwischen Zugstreuer und Zugmaschine. Ein als Zugmaschine geeigneter Ackerschlepper weist an seiner Rückseite eine als Kupplungsgegenstück dienende Anhängerkupplung auf. Die Anhängerkupplung nimmt die Kupplungsvorrichtung der Zugeinrichtung auf, so dass der Anhängestreuer hinter dem Ackerschlepper zur Feldarbeit über sein Fahrwerk abrollend gezogen werden kann.

Weiter ist die Zugeinrichtung mit einem als Wiegezelle ausgebildetem Messelement versehen. Dieses Messelement wirkt mit weiteren, an dem Fahrwerk vorgesehenen Wiegezellen zusammen. Nachteilig ist hierbei, dass die von dem Messelement der Zugeinrichtung ermittelten Messwerte nur in Zusammenhang mit den Messwerten der weiteren Wiegezellen auswertbare Ergebnisse liefern. Das heißt, die Messwerte des der Zugeinrichtung zugeordnetem Messelements sind nur bei Anordnung an dem speziellen Anhängestreuer nutzbringend. Weiter nachteilig ist, dass sich durch die vorstehend beschriebene Zugeinrichtung lediglich Lasten in einer Lastrichtung zur weiteren Auswertung messen lassen. Aus den vorgenannten Gründen ist die Zugeinrichtung nur zu stark eingeschränkten Messungen an dem speziellen Zugstreuer geeignet.

Der vorliegenden Erfindung liegt die Aufgabe zugrunde, eine universell einsetzbare Zugeinrichtung zu schaffen, die zur Messung an der Zugeinrichtung auftretender Lasten eingerichtet ist.

Diese Aufgabe wird erfindungsgemäß dadurch gelöst, dass die Zugeinrichtung zumindest zwei in zueinander winkligen Messebenen Messwerte aufnehmende Messelemente umfasst.

Infolge dieser Maßnahme ist die Zugeinrichtung dazu eingerichtet, Messwerte in mehreren Lastrichtungen aufzunehmen. Die Messelemente sind in dieser Ausführungsform vorzugsweise als Dehnmessstreifen ausgeführt, so dass an der Zugeinrichtung auftretende Lasten von diesen detektiert werden können. Ein besonderer Vorteil ergibt sich hierbei durch die winklig zueinander liegenden Messebenen, da die Dehnmessstreifen sich in der Folge in besonders vorteilhafter Weise zu einer Halb- und/oder Vollbrücke zusammenschalten lassen. Die Zugeinrichtung ist somit universell und ohne das Zutragen weiterer Messelemente einsetzbar.

In einer vorteilhaften Weiterbildung der Erfindung ist vorgesehen, dass eine an der mobilen Maschine angeordnete Zugeinrichtung gegenüber der Zugeinrichtung mit zumindest zwei in zueinander winkligen Messebenen Messwerte aufnehmende Messelementen austauschbar ist. Da unter mobilen Maschinen neben Landwirtschaftsmaschinen auch Forst-, Kommunal- und Baumaschinen zu verstehen sind, ist die Zugeinrichtung auf diese Weise für eine Mehrzahl von Anwendungsfällen einsetzbar.

In einer besonders vorteilhaften Weiterbildung der Erfindung ist die für den üblichen Gebrauch der mobilen Maschine eingerichtete Zugeinrichtung durch eine Zugeinrichtung mit zumindest zwei in zueinander winkligen Messebenen Messwerte aufnehmende Messelementen, die zur Durchführung einer Messfahrt zur Aufnahme von an der Zugeinrichtung auftretenden Kräften eingerichtet ist, austauschbar. Zum üblichen Gebrauch gattungsgemäßer Maschinen sind diese regelmäßig mit besonders simpel ausgeführten Zugeinrichtungen ausgestattet. Ist der Benutzer jedoch an der Aufnahme der an der Zugeinrichtung auftretenden Lasten interessiert, um bspw. Maschineneinstellungen und/oder Maschinenausgestaltungen auf diese abzustimmen und so den Gesamtgebrauch zu optimieren, ist dies nicht ohne weiteres möglich. Da zur Anbringung von Messelementen an üblichen Zugeinrichtungen Manipulationen an selbigen notwendig sind, führt dies unweigerlich dazu, dass die Betriebserlaubnis erlischt. Durch diese Weiterbildung ist es dem interessierten Benutzer in besonders einfacher und sicherer Weise erlaubt die Lasten aufzunehmen, indem er die übliche Zugeinrichtung durch eine erfindungsgemäße Zugeinrichtung austauscht.

In einer ebenfalls vorteilhaften Ausführungsform der Erfindung ist vorgesehen, dass die Zugeinrichtung aus der Flanschverbindung, einem in einem Messbereich mit zumindest annährend quadratischem oder rechtwinkligen, verringerten Querschnitt die zumindest zwei in zueinander winkligen Messebenen Messwerte aufnehmende Messelemente umfassenden Verformungskörper und der Kupplungsvorrichtung besteht. Da die Messung von Lasten mit Hilfe von Dehnmessstreifen darauf basiert, dass gut messbare Verformungen auftreten, ist infolge dieser Maßnahme eine Zugeinrichtung geschaffen, die eine erhöhte Messgenauigkeit aufweist. Da der Messbereich einen verringerten Querschnitt aufweist, treten in diesem Abschnitt der Zugeinrichtung größere Verformungen auf, die sich in der Folge besonders gut durch Dehnmessstreifen detektieren lassen. Ebenso denkbar ist ein Messbereich mit rundem Querschnitt. Durch geeignete Positionierung der Dehnmessstreifen in zueinander winkligen Messebenen ergibt sich auch für einen runden Querschnitt eine vorteihafte Anordnung.

Weiter vorteilhaft ist, dass der Messbereich in dieser Ausführungsform einen zumindest annährend quadratischen oder rechtwinkligen Querschnitt aufweist. Die Anordnung der Dehnmessstreifen ist dadurch in besonders zweckmäßiger Weise erleichtert, da der Querschnitt bereits zueinander winklige Messebenen bildet. Bei der Anbringung muss folglich kein weiterer Aufwand betrieben werden, um eine vorteilhafte Anordnung zu erreichen, sondern die Dehnmessstreifen können besonders einfach durch geeignete Mittel, vorzugweise unter Verwendung von Klebstoff, befestigt werden.

In einer zweckmäßigen Weiterbildung der vorstehenden Ausführungsform ist vorgesehen, dass die Flanschverbindung am hinteren Ende des Verformungskörpers angeordnet ist, und dass die Kupplungsvorrichtung am vorderen Ende des Verformungskörpers angeordnet ist. In besonders vorteilhafter Weise befindet sich der lastaufnehmende Verformungskörper so zwischen den krafteinleitenden Komponenten, so dass sich eine günstige Messanordnung ergibt. Es ist denkbar, dass die Flanschverbindung und der Bereich in dem die Kupplungsvorrichtung angeordnet ist einen gegenüber dem Messbereich vergrößerten Querschnitt aufweisen, um der Zugeinrichtung die gewünschte Betriebsfestigkeit zu verleihen.

In einer besonders zweckmäßigen Weiterbildung ist die Flanschverbindung einstückig mit dem Verformungskörper ausgebildet und die Kupplungsvorrichtung ist über Mittel, welche zur lösbaren Fixierung eingerichtet sind, mit dem Verformungskörper verbunden. Einstückig ausgebildet, das heißt entweder nicht lösbar verbunden, bspw. durch Schweißen, oder aber bereits aus einem Teil geformt, bspw. durch Gießen. Auf diese Weise ist die Verbindung zwischen Flanschverbindung und Verformungskörper besonders sicher gestaltet. Außerdem vorteilhaft ist, dass die Kupplungsvorrichtung vornehmlich sicher und einfach zu tauschen und zu befestigen ist. Als Mittel zur lösbaren Fixierung sind vorzugsweise sowohl Schrauben als auch Bolzen mit Gewindeanteil und zusammenwirkender Mutter oder ohne Gewindeanteil und/oder Sicherungssplint denkbar. Die Auswahl der Mittel zur lösbaren Fixierung ist nicht auf diese Ausführungsformen beschränkt, sondern dient lediglich der Erläuterung.

Um eine Zugeinrichtung zu schaffen, die an eine Mehrzahl von Zugmaschinen ankoppelbar ist, ist in einer weiteren vorteilhaften Weiterbildung der Erfindung vorgesehen, dass die Zugeinrichtung verschiedene Kupplungsvorrichtungen umfasst, wobei die verschiedenen an ein Kupplungsgegenstück an der Zugmaschine angepassten Kupplungsvorrichtungen an der Zugeinrichtung anordbar sind. Da sich die Kupplungsgegenstücke der Zugmaschinen variantenreich unterscheiden, ist die Zugeinrichtung infolge dieser Maßnahme dazu einrichtet, durch die Auswahl der geeigneten Kupplungsvorrichtung vielseitig einsetzbar zu sein. Als Kupplungsvorrichtungen sind beispielsweise Zugösen, Kugelkalotten usw. denkbar.

Eine weitere vorteilhafte Weiterbildung der Erfindung ist dadurch gekennzeichnet, dass die Zugeinrichtung zur Straßenfahrt nach Straßenverkehrs-Zulassungs-Ordnung eingerichtet ist. Der Vorteil besteht hierbei darin, dass die Zugeinrichtung in besonders zweckmäßiger Weise am Hof und/oder Werkstatt eingerichtet und an der mobilen Maschine montiert werden kann und die mobile Maschine anschließend hinter einer Zugmaschine angehangen über öffentliche Verkehrswege zur Messfahrt auf bspw. einem Feld verbracht werden darf. Dem an den an der Zugeinrichtung auftretenden Lasten interessierten Benutzer ist es auf diese Weise möglich und erlaubt die erfindungsgemäße Zugeinrichtung in besonders vorteilhafter Weise einzusetzen.

Die Verwendung der vorstehend beschriebenen Zugeinrichtung zur Durchführung einer Messfahrt ist durch die folgenden Schritte gekennzeichnet:
*a*. Lösen der für den üblichen Gebrach der mobilen Maschine vorgesehenen Zugeinrichtung von der Zugdeichsel,
*b.* Anordnen der Zugeinrichtung mit zumindest zwei in zueinander winkligen Messebenen Messwerte aufnehmenden Messelementen an der Zugdeichsel der mobilen Maschine,
*c*. Verbinden der mobilen Maschine mit der Zugmaschine über die in Schritt b an der mobilen Maschine angeordnete, erfindungsgemäße Zugeinrichtung, und
*d.* Durchführen der Messfahrt.

Vorzugweise sind die Messelemente der Zugeinrichtung mit einer als Auswerteeinheit ausgebildeten Rechen- und/oder Anzeigeeinheit verbunden. Die Rechen- und/oder Anzeigeeinheit umfasst hierzu vorzugweise einen Speicher und ein Auswerteprogramm. Die Rechen- und/oder Anzeigeeinheit kann auf der Zugmaschine angeordnet sein, so dass die Signale der Messelemente bereits während der Messfahrt im Auswerteprogramm analysiert und die Ergebnisse dem Benutzer in geeigneter Weise angezeigt werden können.

Falls die Zugeinrichtung mit einer Kupplungsvorrichtung versehen ist, welche nicht dem Kupplungsgegenstück an der Zugmaschine angepasst ist, umfasst die vorstehende Verwendung zusätzlich den Schritt
*e*. Austausch der Kupplungsvorrichtung durch die an das Kupplungsgegenstück an der Zugmaschine angepasste Kupplungsvorrichtung.

Dieser ist insbesondere vor dem Verbinden der mobilen Maschine mit der Zugmaschine durchzuführen, um die Zugeinrichtung dem Kupplungsgegenstück der Zugmaschine anzupassen. Die Zugeinrichtung kann folglich universell auch bei wechselnden Zugmaschinen verwendet werden.

Infolge der vorstehend beschriebenen Maßnahmen ist eine Zugeinrichtung geschaffen, die universell einsetzbar ist und es dem Benutzer in besonders zweckmäßiger Art ermöglicht die auftretenden Lasten zu messen.

Weitere Einzelheiten der Erfindung sind der Beispielsbeschreibung und den Zeichnungen zu entnehmen. Die Zeichnungen zeigen
- Fig.1: eine mit einer Zugeinrichtung versehene Landmaschine und einen Ackerschlepper in perspektivischer Ansicht,
- Fig.2: das vordere Ende der Landmaschine und ein Kupplungsgegenstück am Ackerschlepper in Detailansicht,
- Fig.3: die Zugeinrichtung in perspektivischer Ansicht, und
- Fig.4: eine Zugeinrichtung mit einer zweiten Kupplungsvorrichtung in perspektivischer Ansicht.

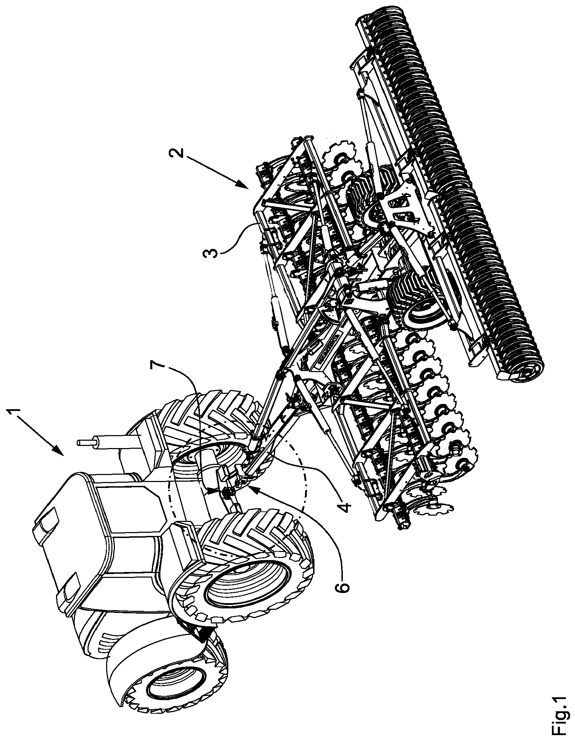

Eine als Ackerschlepper 1 ausgebildete Zugmaschine mit einer zum Anhängen vorgesehenen und als Scheibenegge mit Nachlaufwalze ausgeführten mobilen Landmaschine 2 ist in Fig.1 gezeigt. Die Landmaschine 2 umfasst einen klappbaren Zentralrahmen 3, an dessen vorderes Ende sich eine in Fahrtrichtung erstreckende Zugdeichsel 4 anschließt. An dem Zentralrahmen 3 sind außerdem quer zur Fahrtrichtung verlaufende Bodenbearbeitungswerkzeuge und ein Fahrwerk, sowie die Nachlaufwalze angeordnet. Die Zugdeichsel 4 dient dazu, eine Verbindung zwischen dem Zentralrahmen 3 und dem Ackerschlepper 1 zu schaffen. Hierzu ist am freien Ende der Zugdeichsel 4 mittels einer lösbaren Flanschverbindung 5 eine erste Zugeinrichtung 6 angeordnet. Diese Zugeinrichtung 6 ist mit Hilfe einer an ein Kupplungsgegenstück 7 am Ackerschlepper 1 angepassten Kupplungsvorrichtung 8 dazu eingerichtet, die vorstehend beschriebene Verbindung herzustellen.

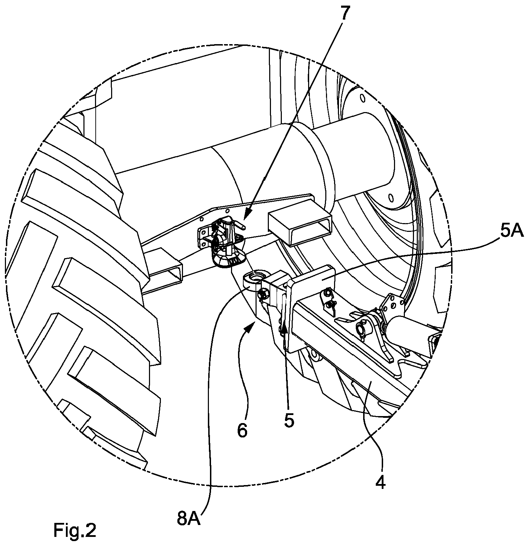

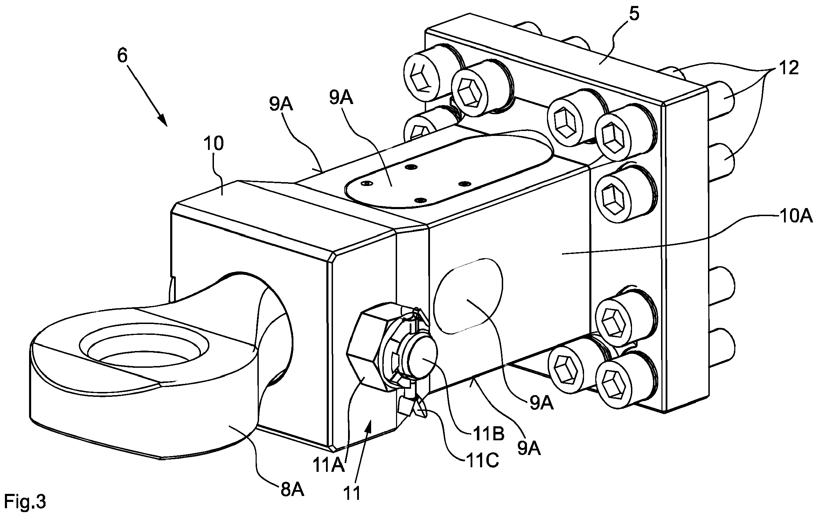

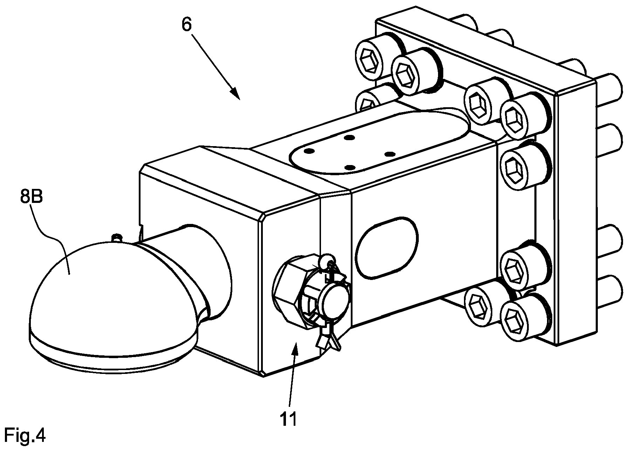

Diese Ausführungsform der Zugeinrichtung 6 mit der als Zugöse 8A ausgeführten Kupplungsvorrichtung 8 ist in Fig.2 in Detailansicht gezeigt. Gattungsgemäße mobile Maschinen, wie bspw. auch Forst-, Kommunal- oder Baumaschinen, sind regelmäßig am vorderen Ende ihrer Zugdeichsel 4 mit einem Flansch 5A zur Befestigung verschiedenster Zugeinrichtungen versehen. Die Flanschverbindung 5 an der erfindungsgemäßen Zugeinrichtung 6 ist so ausgestaltet, dass sie universell an dem Flansch 5a anordbar ist, so dass eine serienmäßige Zugeinrichtung gegen die erfindungsgemäße Zugeinrichtung 6 austauschbar ist. Weiter ist das Kupplungsgegenstück 7 am Ackerschlepper 1 als Zugmaul ausgeführt und dazu eingerichtet, die Zugöse 8A aufzunehmen, so dass die Landmaschine 2 hinter dem Ackerschlepper 1 gezogen werden kann. In der Folge wirken sowohl Zug- als auch Stützlasten auf die Zugeinrichtung 6 ein. Um sämtliche an der Zugeinrichtung 6 auftretende Lasten aufzunehmen, umfasst die Zugeinrichtung 6 insgesamt vier in zueinander winkligen Messebenen aufnehmenden Messelementen 9. Die Anordnung der Messelemente 9 ist im Einzelnen Fig.3 und 4 zu entnehmen.

Fig.3 zeigt die Zugeinrichtung 6 in perspektivischer und Detailansicht. Zwischen der Flanschverbindung 5 am hinteren Ende und der hier als Zugöse 8A ausgeführten Kupplungsvorrichtung 8 besteht die Zugeinrichtung 6 aus einem Verformungskörper 10. Die Zugöse 8A ist am vorderen Ende der Zugeinrichtung 6 in den Verformungskörper 10 eingesteckt und wird mit Hilfe von Sicherungsmitteln 11 lösbar fixiert. Die Sicherungsmittel 11 umfassen hierzu eine Sicherungsmutter 11A, einen Sicherungsbolzen 11B und einen Splint 11C. Der Sicherungsbolzen 11B wird von der hier abgewandten Seite durch den vorderen Teil des Verformungskörpers 10 und den eingesteckten Teil der Zugöse 8A geführt, so dass der Sicherungsbolzen 11B mit seinem freien Ende aus dem Verformungskörper 10 auf der nicht abgewandten Seite hervor steht. Das freie Ende des Sicherungsbolzens 11B ist mit einem zu dem Innengewinde der Sicherungsmutter 11A korrespondierendem Außengewinde versehen, so dass die Sicherungsmutter 11A aufgeschraubt werden kann. Ein Verdrehen des Sicherungsbolzens 11B bei Aufschrauben der Sicherungsmutter 11A wird hierbei durch seinen Kopf, der in verdeckter Weise in einer hierfür vorgesehenen Nut im Verformungskörper 10 formschlüssig anliegt, verhindert. Abschließend wird entlang der Sicherungsmutter 11A durch eine Bohrung im Sicherungsbolzen 11B der Splint 11C eingeschoben und umgebogen, so dass die Zugösen 8A verdrehsicher und lösbar befestigt ist.

Die Flanschverbindung 5 ist einstückig, das heißt aus einem Teil, mit dem Verformungskörper 10 ausgebildet und umfasst insgesamt zwölf Schrauben 12 zur Befestigung an dem Flansch 5A der Landmaschine 2. In jeder Ecke der Flanschverbindung 5 sind jeweils drei Schrauben 12 angeordnet, welche in korrespondierende Gewinde im Flansch 5A eingedreht sind.

Wie Fig.3 zeigt, ist der mittlere Teil des Verformungskörpers 10 gebildet durch einen Messbereich 10A. Der Messbereich 10A weist einen gegenüber dem vorderen und hinteren Ende des Verformungskörpers 10 verringerten Querschnitt mit ebenfalls quadratischer Grundfläche auf. Auf jeder Seite des Messbereichs 10A sind Flächen 9A vorgesehen auf denen die nicht dargestellten Messelemente 9 aufgeklebt werden. So ergeben sich insgesamt vier rechtwinklig zueinander stehende Messebenen. Dies ist besonders vorteilhaft bei Verwendung von Dehnmessstreifen als Messelemente 9, da sich diese so besonders einfach zu einer Voll- oder Halbbrücken zusammenschalten lassen und sich so eine vorteilhafte Messanordnung ergibt. Mittels auf den Flächen 9A aufgeklebter Messelemente ist die Zugeinrichtung 6 dazu eingerichtet, Kräfte in den Hauptlastrichtungen aufzunehmen und die Signale über ebenfalls nicht dargestellte Verbindungen an eine Rechen- und/oder Anzeigeeinheit weiterzuleiten. Die Rechen- und/oder Anzeigeeinheit kann als Terminal oder beliebiges anderes Gerät, welches zur Verarbeitung und/oder Anzeige von Daten eingerichtet ist, ausgebildet sein. Vorzugsweise umfasst die Rechen- und/oder Anzeigeeinheit hierzu einen Speicher und ein Auswerteprogramm.

In Fig.4 ist die Zugeinrichtung 6 mit einer weiteren Ausführungsform der Kupplungsvorrichtung 8 als Kugelkalotte 8B gezeigt. Die Kugelkalotte 8B lässt sich nach Lösen der Sicherungsmittel 11 an der Zugeinrichtung 6 anordnen und durch Wiedereinsetzen der Sicherungsmittel 11 befestigen. Die erfindungsgemäße Zugeinrichtung 6 ist so dazu eingerichtet, mit der Zugmaschine 1 verbunden zu werden, wenn diese ein als Kugelkopfkupplung ausgeführtes Kupplungsgegenstück 7 aufweist. Neben den beiden gezeigten Ausführungsformen der Kupplungsvorrichtung 8 als Zugöse 8A und Kugelkalotte 8B umfasst die Zugeinrichtung 6 noch eine Mehrzahl weiterer Kupplungsvorrichtungen 8. Diese können sich innerhalb einer Ausführungsform bspw. in ihren Abmaßen unterscheiden. Ebenso denkbar sind weitere Ausführungsformen, so dass die Zugeinrichtung 6 insgesamt universell an die Zugmaschine 1 mit ihrem Kupplungsgegenstück 7 anpassbar ist.

Die vorstehend beschriebene Zugeinrichtung 6 ist zur Straßenfahrt nach Straßenverkehrs-Zulassungs-Ordnung zugelassen und ihre Verwendung zur Durchführung einer Messfahrt gestaltet sich wie folgend beschrieben: Üblicherweise ist die Landmaschine 2 mit einer Serien-Zugeinrichtung versehen, welche von dem Flansch 5A zu lösen ist. Anschließend kann die erfindungsgemäße Zugeinrichtung 6 an dem Flansch 5A montiert werden, indem die Schrauben 12 in den Flansch 5A eingeschraubt werden. Falls die Kupplungsvorrichtung 8 an der Zugeinrichtung 6 nicht an das Kupplungsgegenstück 7 am Ackerschlepper 1 angepasst ist, sind die Sicherungsmittel 11 zu lösen, so dass die Kupplungsvorrichtung 8 durch eine Angepasste ausgetauscht werden kann. Nachdem die an das Kupplungsgegenstück 7 angepasste Kupplungsvorrichtung 8 mittels der Sicherungsmittel 11 wieder fixiert ist, wird die Landmaschine 2 mit dem Ackerschlepper 1 über die Zugeinrichtung 6 verbunden. Hierbei wird nicht nur die Landmaschine 2 angekuppelt sondern auch die Verbindungen zwischen den Messelementen 9 der Zugeinrichtung 6 und einer Rechen- und/oder Anzeigeeinheit hergestellt. Zum Durchführen der Messfahrt kann das Gespann aus Ackerschlepper 1 und Landmaschine 2 nun über öffentliche Verkehrswege zum gewünschten Ort verbracht werden oder die Messfahrt unmittelbar gestartet werden.

Die Messfahrt ist unter Anwendung der gewünschten Betriebsparameter durchzuführen, so dass die Zugeinrichtung 6 genau die Lasten erfährt, die bei der geplanten Bearbeitung auftreten. Die Messelemente 9 detektieren diese Kräfte und übermitteln die Signale an die Rechen- und/oder Anzeigeeinheit, wo sie verarbeitet und/oder gespeichert und/oder angezeigt werden. Die erfindungsgemäße Zugeinrichtung 6 ist folglich universell an sämtlichen mobilen Maschinen, wie bspw. der Landmaschine 2, und verschiedensten Zugmaschinen, wie bspw. dem Ackerschlepper 1, einsetzbar und dazu eingerichtet, die auftretenden Lasten zu messen.

### Bezugszeichenliste

- 1: Ackerschlepper
- 2: Landmaschine
- 3: Zentralrahmen
- 4: Zugdeichsel
- 5: Flanschverbindung
- 5A: Flansch
- 6: Zugeinrichtung
- 7: Kupplungsgegenstück
- 8: Kupplungsvorrichtung
- 8A: Zugöse
- 8B: Kugelkalotte
- 9: Messelement
- 9A: Fläche
- 10: Verformungskörper
- 10A: Messbereich
- 11: Sicherungsmittel
- 11A: Sicherungsmutter
- 11B: Sicherungsbolzen
- 11C: Splint
- 12: Schraube

## Patentansprüche

1. Zugeinrichtung (6) mit zumindest einem Messelement (9), welches mittels einer lösbaren Flanschverbindung (5) an einer Zugdeichsel (4) einer mobilen Maschine, insbesondere Landmaschine (2) anordbar ist und mittels einer Kupplungsvorrichtung (8) dazu eingerichtet ist, die mobile Maschine mit einer Zugmaschine, insbesondere Ackerschlepper (1) zu verbinden, **dadurch gekennzeichnet, dass** die Zugeinrichtung (6) zumindest zwei in zueinander winkligen Messebenen Messwerte aufnehmende Messelemente (9) umfasst.

2. Zugeinrichtung (6) nach Anspruch 1, **dadurch gekennzeichnet, dass** eine an der mobilen Maschine angeordnete Zugeinrichtung gegenüber der Zugeinrichtung (6) mit zumindest zwei in zueinander winkligen Messebenen Messwerte aufnehmende Messelementen (9) austauschbar ist.

3. Zugeinrichtung (6) nach Anspruch 1, **dadurch gekennzeichnet, dass** die für den üblichen Gebrauch der mobilen Maschine eingerichtete Zugeinrichtung durch eine Zugeinrichtung (6) mit zumindest zwei in zueinander winkligen Messebenen Messwerte aufnehmende Messelementen (9), die zur Durchführung einer Messfahrt zur Aufnahme von an der Zugeinrichtung (6) auftretenden Kräften eingerichtet ist, austauschbar ist.

4. Zugeinrichtung (6) nach Anspruch 1, **dadurch gekennzeichnet, dass** die Zugeinrichtung (6) aus der Flanschverbindung (5), einem in einem Messbereich (10A) mit zumindest annährend quadratischem oder rechtwinkligen, verringerten Querschnitt die zumindest zwei in zueinander winkligen Messebenen Messwerte aufnehmende Messelemente (9) umfassenden Verformungskörper (10) und der Kupplungsvorrichtung (8) besteht.

5. Zugeinrichtung (6) nach Anspruch 4, **dadurch gekennzeichnet, dass** die Flanschverbindung (5) am hinteren Ende des Verformungskörpers (10) angeordnet ist, dass die Kupplungsvorrichtung (8) am vorderen Ende des Verformungskörpers (10) angeordnet ist.

6. Zugeinrichtung (6) nach Anspruch 4 und 5, **dadurch gekennzeichnet, dass** die Flanschverbindung (5) einstückig mit dem Verformungskörper (10) ausgebildet ist, dass die Kupplungsvorrichtung (8) über Mittel (11), welche zur lösbaren Fixierung eingerichtet sind, mit dem Verformungskörper (10) verbunden ist.

7. Zugeinrichtung (6) nach zumindest einem der vorstehenden Ansprüche, **dadurch gekennzeichnet, dass** die Zugeinrichtung (6) verschiedene Kupplungsvorrichtungen (8) umfasst, dass die verschiedenen an ein Kupplungsgegenstück (7) an der Zugmaschine angepassten Kupplungsvorrichtungen (8) an der Zugeinrichtung anordbar sind.

8. Zugeinrichtung (6) nach zumindest einem der vorstehenden Ansprüche, **dadurch gekennzeichnet, dass** die Zugeinrichtung (6) zur Straßenfahrt nach Straßenverkehrs-Zulassungs-Ordnung eingerichtet ist.

9. Verfahren zur Durchführung einer Messfahrt unter Verwendung der Zugeinrichtung (6) nach zumindest einem der Ansprüche 1 bis 8, **gekennzeichnet durch** die folgenden Verfahrensschritte:
*a*. Lösen der für den üblichen Gebrach der mobilen Maschine vorgesehenen Zugeinrichtung von der Zugdeichsel (4),
*b.* Anordnen der Zugeinrichtung (6) mit zumindest zwei in zueinander winkligen Messebenen Messwerte aufnehmenden Messelementen (9) an der Zugdeichsel (4) der mobilen Maschine,
*c*. Verbinden der mobilen Maschine mit der Zugmaschine über die in Schritt b an der mobilen Maschine angeordnete, erfindungsgemäße Zugeinrichtung (6), und
*d.* Durchführen der Messfahrt.

10. Verfahren nach Anspruch 9, **dadurch gekennzeichnet, dass** falls die Zugeinrichtung (6) mit einer Kupplungsvorrichtung (8) versehen ist, welche nicht dem Kupplungsgegenstück (7) an der Zugmaschine angepasst ist, Austausch der Kupplungsvorrichtung (8) durch die an das Kupplungsgegenstück (7) an der Zugmaschine angepasste Kupplungsvorrichtung (8).
